# DEMANDE DE BREVET EUROPEEN

(11) **EP 1 922 940 A1**
(43) Date de publication de la demande: **21.05.2008**
(21) Numéro de dépôt: 06380301.9
(22) Date de dépôt: 17.11.2006
(51) Int. Cl.: A23L 1/39, A23L 1/03

(54) **Un aliment liquide nutritif hydratant et antioxydant**

(71) Demandeur: Fernandez Jimenez, Maria Ascension, 28660 Boadilla del Monte, Madrid (ES)
(72) Inventeur: Fernandez Jimenez, Maria Ascension, 28660 Boadilla del Monte, Madrid (ES)
(74) Mandataire: Manzano Cantos, Gregorio

(57) **Abrégé**

UN ALIMENT LIQUIDE NUTRITIF HYDRATANT ET ANTIOXYDANT, qui est intégré par la composition d'une version typique de gazpacho à base d'ail, l'oignon, le poivron, le tomate, l'huile d'olive et le concombre, triturés et dissous dans l'eau, à laquelle on ajoute essentiellement un oligo-élément comme nutriment stimulant dans une petite proportion.

## Description

### OBJET DE L'INVENTION

L'invention a pour objet l'élaboration avec les ingrédients traditionnels d'un gazpacho qui contient de l'ail, de l'oignon, du poivron, de la tomate, de l'huile d'olive et des concombres avec la participation proportionnelle que l'invention proposera et auquel on ajoute essentiellement une portion d'un oligo-élément qui apporte les conditions optimales de régénération et réparation de l'appareil locomoteur.

Selon l'invention la substance ajoutée essentielle dans la formule du produit est un oligo-élément, constitué par du silicium à l'état liquide qui participe dans une petite proportion au contenu général mais qui a les avantages et les conséquences dérivées de cette substance qui seront exposées ci-dessous.

Selon l'invention, la boisson originelle résultante sera un cocktail de vitamines, minéraux, antioxydants, provenant des légumes et de plantes potagères, plus l'acide oléique provenant de l'huile d'olive. Elle est indiquée pour tous les âges et toutes les situations physiologiques. Elle est très appropriée pour les personnes devant limiter l'énergie de leur diète et si l'on se passe du sel ajouté, il peut être un plat apte pour les diètes hyposodiques, bien qu'elles devront se priver de celui-ci les personnes souffrant de maladies comme: hernie d'hiatus ou gastrite car la tomate est un aliment qui peut irriter la muqueuse de l'appareil digestif. Le licopène de la tomate est du carotène naturel qui nous protège du cancer entre autres de la prostate, maladies vasculaires, l'huile d'olive est une graisse mono-insaturée qui favorise la diminution des niveaux de LDL dans le sang. Le concombre apporte très peu de calories étant donné son contenu réduit en hydrates de carbone en comparaison d'autres légumes et étant donné son contenu élevé en eau. Cela fait que cet aliment soit très recommandable dans les diètes amaigrissantes. Il est riche en vitamines du groupe B (B1, B2, B3 et B6) et des minéraux, parmi lesquels on remarque le nickel, un minéral essentiel dont on a besoin dans de très petites quantités, mais qui accomplit des fonctions très importantes dans l'organisme: il contrôle l'incorporation du fer aux globules rouges et intervient dans la sécrétion d'enzymes digestives en rapport avec l'obtention d'énergie. En outre, il apporte, bien que dans des quantités pas très élevées, du sélénium et de la vitamine E, avec l'action anti-oxydante et protectrice contre les radicaux libres.

Chez les sportifs cette boisson sera un excellent allié pour la remise en état après l'entraînement, outre l'hydratation, elle apporte également les vitamines et les minéraux perdus, surtout si l'exercice est fait à des saisons chaudes.

### ANTECEDENTS DE L'INVENTION

Comme l'on sait le gazpacho, un aliment typique espagnol, est très connu et ses ingrédients et sa composition doivent être considérés du domaine public ou compris dans l'état de la technique, sauf des cas exceptionnels dans lesquels la proportion ou formule de l'élaboration pourraient être originaux et constituer une raison de dépôt ou qu'ils soient un secret de cuisine, ce qui est le plus habituel.

Dans ce cas, la formule d'élaboration du gazpacho serait constituée de la composition traditionnelle, possiblement avec des participations un peu différentes, mais fondamentalement originale par les substances étrangères à l'aliment commun que l'invention apporte.

### DESCRIPTION DE L'INVENTION

Comme il a été recueilli dans l'état de la technique, le gazpacho existe déjà dans le marché avec différentes versions et il est commercialisé sous différentes marques mais aucun, comme celui de l'invention, ne porte un oligo-élément de la famille des silanols avec d'importants bénéfices pour la santé, cet oligo-élément se trouve dans la peau, les ongles, le tissu connectif, le cartilage, les os, car il est fondamental pour la re-minéralisation de la matrice osseuse, pour la synthèse de mucopolysaccharides, il évite le vieillissement de la peau et des parois des vaisseaux sanguins.

Selon l'invention, celle -ci serait composée des ingrédients typiques du gazpacho, ail, oignon, poivron, tomate, huile d'olive et concombre, triturés et dissous dans l'eau avec la participation en pourcentage entre 190-220 ml pour une quantité totale de 250ml et dans laquelle la dose de silicium également dissout dans le mélange équivaudrait entre 30-60 ml établi comme adéquate pour maintenir ou remplir les niveaux.

Un autre détail de l'invention est la participation qualitative desdits ingrédients dans la participation en pourcentage qui se dégage de ladite composition à 100%, d'une quantité de produit de 250ml serait de:
- 99,80- 99,76 % gazpacho
- 0,12- 0,24 % silicium
dans lequel, le silicium est un silicium liquide de 5^{ème} génération (G5), tout cela dissout dans le gazpacho dans lequel entre 80 et 90 % est de l'eau purifiée.

Une fois adéquatement décrite la nature du modèle on remarque aux effets opportuns que ceci ne se limite pas aux détails exacts de cet exposé, mais par contre, on y introduit les modifications considérées opportunes, si toutefois cela n'altère pas les caractéristiques essentielles de l'invention, qui sont revendiqués à la suite.

## Revendications

1. UN ALIMENT LIQUIDE NUTRITIF HYDRATANT ET ANTIOXYDANT qui est constitué d'une version du gazpacho typique avec ses ingrédients, l'ail, l'oignon, le poivron, la tomate, l'huile d'olive et le concombre, triturés et dissous dans l'eau, qui est **CARACTÉRISÉ EN CE QU'**il a l'apport d'un ingrédient en tant qu'oligo-élément qui est du silicium à l'état liquide de 5^{ème} génération (G5).

2. UN ALIMENT LIQUIDE NUTRITIF HYDRATANT ET ANTIOXYDANT selon la revendication 1 dans lequel l'apport de silicium est **CARACTÉRISÉ EN CE QU'**il participe à une proportion de 0,12-0,24 % du total de la composition.

3. UN ALIMENT LIQUIDE NUTRITIF HYDRATANT ET ANTIOXYDANT selon la revendication 1 dans lequel la combinaison de gazpacho et d'oligo-élément, est **CARACTÉRISÉE EN CE QUE** la proportion en pourcentage sur une dose de 250 ml au total est de de:
- de 190 - 220 ml de gazpacho
- de 60 - 30 ml de silicium.

4. UN ALIMENT LIQUIDE NUTRITIF HYDRATANT ET ANTIOXYDANT, selon la revendication 2 dans lequel la proportion en pourcentage quantitative sur le 100% est **CARACTÉRISÉE EN CE QUE** la participation qualitative est de:
- 99,80- 99,76 % gazpacho
- 0,12- 0, 24 % silicium

## Revendications modifiées

### Revendications modifiées conformément à la règle 137(2) CBE.

**1.** UN ALIMENT LIQUIDE NUTRITIF HYDRATANT ET ANTIOXYDANT qui est constitué d'une version connue du gazpacho typique avec ses ingrédients, l'ail, l'oignon, le poivron, la tomate, l'huile d'olive et le concombre, triturés et dissous dans l'eau, qui est **CARACTÉRISÉ EN CE QU'**il a l'apport d'un ingrédient en tant qu'oligo-élément qui est du silicium à l'état liquide de 5^{ème} génération (G5), à une proportion de 0,12-0,24 % du total de la composition.

**2.** UN ALIMENT LIQUIDE NUTRITIF HYDRATANT ET ANTIOXYDANT selon la revendication 1 dans lequel la combinaison de gazpacho et d'oligo-élément, est **CARACTÉRISÉE EN CE QUE** la proportion en pourcentage sur une dose de 250 ml au total est de:
- de 190 - 220 ml de gazpacho
- de 60 - 30 ml de silicium.

**3.** UN ALIMENT LIQUIDE NUTRITIF HYDRATANT ET ANTIOXYDANT, selon la revendication 1 dans lequel la proportion en pourcentage quantitative sur le 100% est **CARACTÉRISÉE EN CE QUE** la participation qualitative est de:
- 99,80 - 99,76 % gazpacho
- 0,12 - 0, 24 % silicium
